Europäisches Patentamt

European Patent Office

Office européen des brevets

(11) Publication number: **0 496 059 A1**

# EUROPEAN PATENT APPLICATION

(21) Application number: **91120364.4**

(22) Date of filing: **28.11.91**

(51) Int. Cl.⁵: **B60L  11/18**

(30) Priority: **30.11.90 IT 1255490**

(43) Date of publication of application:
**29.07.92 Bulletin  92/31**

(84) Designated Contracting States:
**AT BE CH DE DK ES FR GB GR LI LU NL SE**

(71) Applicant: **DIGITALIA S.R.L.**
**Via Corsica, 19/3**
**Genova(IT)**
Applicant: **TECHNIPLAST S.r.l.**

Via Roma, 8/A
Genova(IT)

(72) Inventor: **Zipoli, Claudio**
**Via Molfino 6/40**
**Genova(IT)**

(74) Representative: **La Ciura, Salvatore**
**c/o STUDIO D'ORIO Via F. Sforza, 3**
**I-20122 Milan(IT)**

(54) **Method and device for transmission control in electrical feed vehicles.**

(57) Method for electrical feed vehicle transmission control including at least one electric motor (M1, M2) and a driving wheel (1), whose respective shafts are mechanically linked together by a coupling device (2), wherein:

a) the instantaneous difference between the r.p.m. of the driving wheel (1) and the r.p.m. of the electric motor (M1, M2), is monitored, preferably on their shafts, upstream and downstream of the coupling device (2). The coupling device is adjustable according to torque transmission;

b) this difference in r.p.m. is transformed on the basis of noted characteristics of torque transmission of the coupling device (2), into a regulation or drive signal the coupling device in relation to the transmitted torque.

Fig.1

The invention relates to a method and a device for the transmission control of electrical vehicles.

Today electrical feed vehicles have a single electric motor which is dynamically connected to the driving wheel(s) by means of a mechanical transmission, almost identical to that used in vehicles with a combustion engine.

This transmission usually consists of a clutch, a gearshift and a differential. But mechanical transmission is not really suitable for use in electric vehicles, as the resultant dynamic friction absorbs a considerable amount of energy. This reduces autonomy of electrical traction vehicles and obstructs the use of regulating devices which could regulate both transmitted and delivered torques, in order to improve energy consumption and performance of vehicles themselves.

The invention concerns to the problem involved in realizing a method and a device for transmission control in electric vehicles by which it is possible to avoid the troubles of the known mechanical transmissions, expecially by avoiding the use of these latter ones.

The invention provides a method for the transmission control for electrical feed vehicles with at least one electric motor and one driving wheel whose respective shafts are dynamically linked by a coupling device according whith:

a) the instantaneous difference between the r.p.m. of the driving wheel and the r.p.m. of the electric motor is measured. This is suitable measured on each shaft, the shafts being positioned both upstream and downstream of the coupling device. The coupling device is adjustable according to the torque delivered;

b) this difference in r.p.m. is transformed, on the basis of the known characteristics of torque transmission of the coupling device, into a value by which to regulate the coupling device in relation to the transmitted torque.

c) the transformation of the difference in r.p.m. is made in such a way that adjustment of the coupling device minimalizes or reduces to almost zero value of said difference in r.p.m. between the electric motor and the driving wheel.

d) the measurement of the difference in r.p.m., its transformation and adjustment of the coupling device are made in real time, continuously and dynamically.

Using the method described above the invention provides a device for the transmission control of electric vehicles including at least one electric motor that operates at least one driving wheel by means of a coupling device, in which there are provided:

an electrically adjustable coupling device;

two electronic r.p.m. sensors, positioned one on the shaft of the electric motor upstream from the coupling device and the other on the wheel shaft, downstream from the coupling device;

a control processor provided with inputs to which the r.p.m. sensors are connected, with at least one control output for regulating the coupling device and with a memory containing the transmission characteristics of the said coupling device according to the range of regulation required.

According to a further embodiment of the invention, the propulsion system consists of at least two electric motors which can be dynamically, separately and/or contemporaneously, linked to the engine shaft of the driving wheel(s) by, for example, a selective coupling device. These two motors may be separately or contemporaneously activated, one of said motors, the so-called "starter motor" is capable of developing maximum torque at a low r.p.m., besides the other motor, the so-called "cruising motor" is capable of developing the maximum torque at a high r.p.m., switching systems being provided in turn one of said motors at the same time, depending on the running conditions of the vehicle in relation to each of the motors.

The selective coupling devices can be of any type, for example, flexible coupling, one-way bearing or transmissions which can be uncoupled.

Advantageously the switching systems are made up of a energy control unit which is activated by the electronic computer for the activation of one or both motors according to vehicle gear conditions. Sensors are provided to monitor gear conditions by recording the differences between the torque delivered by each motor. These sensors are connected to the computer (in-put side) as is the regulation control of the desired torque (accelerator pedal).

In vehicles with at least two driving wheels, the invention also provides each driving wheel with an independent motor such as described above and whose common functionning is controlled by the electronic computer.

The application of the method and device in this invention has many advantages. This type of torque transmission between the propulsion system and the driving wheel substantially eliminates that absorption of power by dynamic friction typical of known mechanical transmissions. It allows a continuous dynamic adjustment of the coupling device while guaranteeing minimum consumption of energy in order to obtain the maximum torque transmission. This increases vehicle autonomy and greater durability of transmission parts.

Doubling of the electric propulsion system in a starter motor and a cruising motor improves energy use by activating the starter motor during acceleration phases and when moving from a stationary position, and by deactivating it when, at the required speed, the cruising motor is inserted.

Since the starter motor is activated only for the short time necessary to push beyond the inertia point, there is no danger of over-heating or motor damage, since it can be efficiently cooled in the inactive phase. This minimalizes the two motor sizes, in particular of the same starter motor itself thus avoiding bulk, excessive weights and limiting cost.

In vehicles with two or more driving wheels, each provided with its own propulsion system as described above, the invention provides a control system which acts as a differential, and obtain a self-locking and flexible coupling system, and regulates braking.

The invention also provides other characteristics which ameliorate the method and the device hereabove described and that are objects of the depending claims.

The particular characteristics of the invention and the advantages to be gained may be seen in more detail from the description of a suitable execution which is offered as a not limiting example as shown in the enclosed diagrams, wherein:

Figure 1 is a block diagram of an electrical feed vehicle.

Figure 2 is an enlarged detail of the transmission control device of one of the driving wheels.

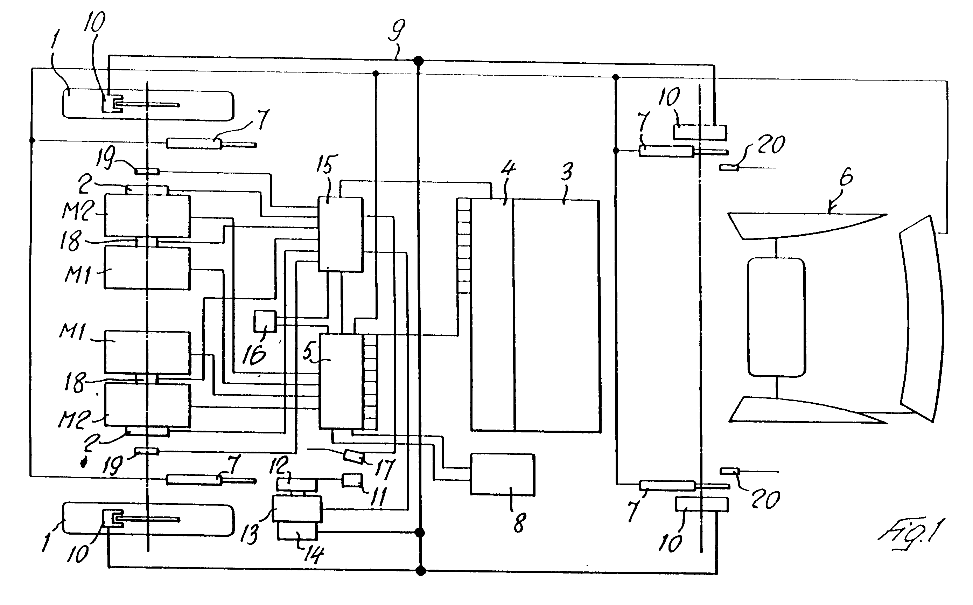

Referring to the block diagram of Fig. 1 the electrical feed vehicle includes a separate propulsion system for each of the two driving motors (1); a power supply circuit (9) for the propulsion system; an electrical energy recovery unit consisting of a number of recovery generators; a central control unit (15) with monitoring sensors and control actuators for vehicle function management.

The propulsion system of each driving wheel (1) is made up of two electric motors M1, M2. The two electric motors M1 and M2 are coaxially mounted on the engine shaft of the respective driving wheels (1) which are connected to the same by a coupling device (2). Such coupling device (2) is adjustable or may be electrically activated, according to the transmitted torque. In the case of a mechanical device it may have an electric regulating actuator.

The coupling device (2) preferably consists of an electromagnetic or electroliquid clutch with a belt speed reducer. Each motor M1, M2 of the two propulsion systems of the two driving wheels (1) is electrically connected to an electrical energy accumulator (3), including, for example, rechargeable batteries linked together in such a way as to provide the voltage and current necessary to feed the motors M1 and M2.

Advantageously, the electrical energy accumulator (3) is provided with a voltage regulating device (4), with a large number of positive boosters. A power control unit (5) is positioned between motors M1 and M2 and the electrical energy accumulator (3) to manage connections between motors M1 and M2 and the accumulator and regulate power supply to M1 and M2.

The electrical energy recovery devices are linked to the power control unit (5). These devices may be of any type and in the present realizing example consist of motors M1 and M2 themselves which act as generators during braking of one or more photovoltaic cells (6) and absorbers themselves (7). Absorbers (7) are in the form of linear electrical energy generators and convert the dynamic work of the suspension into electrical energy.

Recovered electrical energy is not stored directly into accumulators (3) but in electronic flywheel (8). This is linked to power control unit (5) and is able to absorb the recovered energy much more quickly, also avoiding energy dissipation in the form of heat.

The braking circuit (9) is such a hydraulic one. The braking devices (10) of each wheel are controlled with brake pedal (11) by means of hydraulic pump (12) linked to a liquid plenum chamber (13). An on/off solenoid valve electrovalve (14) is positioned between the plenum chamber and the circuit (9), while the plenum chamber itself (13) is provided with a pressure sensor (not shown in detail) The management of said members is controlled by a central control unit, for example, a computer (15). Other than the basic functions described, the computer (15) can also control all vehicle functions including accessory systems such as heating etc..

Figure 1 shows a heating pump (16) that is linked both to the energy control unit (5) and the computer itself (15).

Sensors which monitor the function parameters of the above mentioned devices are connected to the computer (15) for vehicle function management along with the regulating actuators of the devices themselves.

On the basis of sensor readings, the computer (15) calculates the regulating signals required to improve vehicle function, obtaining the best performance with the lowest possible use of energy. Connected to the computer (15) are the electrical energy accumulator (3), the regulating device (4), the energy control unit (5), the electric transducer of the accelerator pedal (17) and the liquid plenum chamber (13) pressure sensor in the braking circuit (9).

Also connected to the computer (15), as will be described in greater detail below, are the torsion sensor (18) positioned on either side of a flexible coupling (22) in order to measure the difference in delivered torque from motors M1 and M2 of each propulsion system, the sensors (19) which monitor the difference in torque between the driving motor (1) and its respective propulsion system, regulating or driving actuators of the coupling device (2), and the sensors (20) which monitor steering wheel angle.

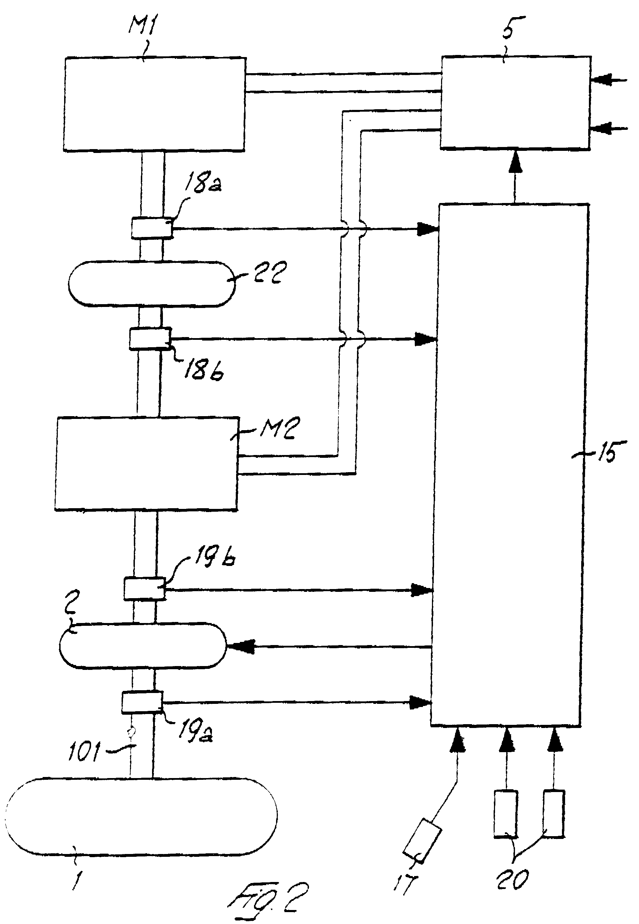

With reference to the diagram in fig. 2, the coupling device (2) between the propulsion system shaft and the shaft (101) of the driving wheel (1) is adjustable or may be electrically activated.Suitably in proportion to the size of the guiding or regulating signal and the torque transmission ratio. The coupling device (2) is connected to the computer control out-put (15).While sensors to monitor r.p.m. (19a, 19b) are positioned on the driving wheel shaft (1) and on the propulsion system shaft, respectively upstream and downstream of the coupling device (2). These two sensors 19a, 19b are connected to the computer in-put (15).

From signals received from the sensors (19a, 19b) the computer (15) calculates the difference in r.p.m. of each driving wheel (1) and their respective propulsion systems. According to coupling device characteristics (2) memorized in the computer (15), from said the difference in r.p.m. this latter generates a signal for the driving or regulating of the coupling device (2).

The driving or regulation signal is calculated and constantly corrected in real time to minimize or reduce almost to zero the difference in r.p.m.. When this condition is satisfied, the coupling device is operating at full efficiency, transmitting the delivered torque to the driving wheel by means of the propulsion system without loss in power from dynamic friction or slipping and with the minimum use of energy for driving or regulation.

Motors M1 and M2 of the propulsion system of each driving wheel are placed on a common engine shaft. The engine shaft is divided into two sections one for each pair of motors M1 and M2. These motors (M1, M2) are connected together by a selective coupling device, for example by a flexible coupling (22) or a one-way bearing.

In the case of the flexible bearing a sensor (18a, 18b) is placed on the shaft section of each motor M1 and M2 upstream and downstream the flexible coupling (22). Together these sensors (18a,18b) form a motor shaft torsion sensor and are connected to computer (15) inputs.

Motors M1, M2 differ in the r.p.m. at which each develops its maximum torque. Motor M2, the so-called the "starter motor" develops its maximum torque at a low r.p.m., for example 1000 r.p.m. and it is suitable for start-up from a stationary position and acceleration.

Motor M1, the so-called "cruising motor" develops its maximum torque at a high speed (e.g. 3000 r.p.m.) and is therefore preferably used during cruising.

On the basis of signals from the monitoring sensors (18a, 18b), and the acceleration desired by the user and communicated to the computer (15) via the accelerator pedal (17), the computer (15) causes the energy control unit (5) to activate or deactivate alternately or contemporaneously the two motors M1 and M2. This takes place according to vehicle gear conditions and the characteristics of the two motors M1 and M2 which are activated in the conditions most suitable to them.

When starting up from a stationary position with normal acceleration the computer (15) activates only the starter motor M2. When very high acceleration is desired the computer activates both motors M1 and M2 at the same time. When the vehicle has reached cruising speed, the computer (15) deactivates the starter motor M2 and activates the cruising motor M1.

When, as in the present example, the motors M1 and M2 are coaxially linked both to each other and to the motor shaft by a flexible coupling (22), even though the cruising motor M1 has to turn over the deactivated starter motor during cruising, the loss of energy is minimal and may be compensated by feeding the equivalent quantity of electrical energy to the starter motor M2. This does not happen when instead of a flexible coupling (22), a one-way bearing is used.

As each driving wheel has its own independent propulsion system, controlled by the computer (15), the propulsion system can easily carry out the differential functions, self-blocking and flexible coupling functions and brake regulation, with characteristics similar to systems such as the so-called ABS or similar.

The differential action is carried out by the computer (15) which uses, for example, sensors (19a, 19b) to compare the r.p.m. of the opposite driving wheels. Under the control of the computer, energy control unit (5) drives the driving wheels at different speeds, as required by the steering angle. This is carried out automatically by connecting two sensors (20), which monitor the steering angle, to the computer (15). The computer (15) then calculates the difference in rotatory speed of the drive wheels corresponding to the observed steering angle. The computer then communicates this difference to the energy control unit (5) which regulates the power supply currents to motors M1 and M2 of each propulsion system accordingly. These steering angle sensors (20) may be connected to both the steering wheels or to the steering device.

Limitation of the difference in speed of the driving wheels according to steering angle guarantees self-locking of the differential at the same time.

Continuous control of the differences in driving wheel speed allows the implementation of flexible coupling and brake regulation functions. Variations in speed, not justified the steering angle, (for example the skidding or blocking of a driving wheel), are immediately signalled to the computer (15). The computer acts on the propulsion system via the energy control unit (5) in real time, to make up the difference in driving wheel speed (1).

Another characteristic of the invention concerns vehicle stopping. In this case the computer (15) frees the driving wheels (1) from their respective propulsion systems by deactivating the coupling device (2). The propulsion systems are kept turning for a predetermined period, after which they are deactivated by the computer (15).

Coupling devices (2) may also be used to carry out differential functions with implementation of self-locking and flexible coupling, and braking regulation.

Naturally, the invention is not limited to the executive forms described and illustrated above but can be widely varied and modified without abandoning the basic principle outlined above and claimed below.

**Claims**

1. Method for electrical feed vehicle transmission control including at least one electric motor (M1, M2) and a driving wheel (1), whose respective shafts are mechanically linked together by a coupling device (2), characterized by the fact that:

   a) the instantaneous difference between the r.p.m. of the driving wheel (1) and the r.p.m. of the electric motor (M1, M2), is monitored, preferably on their shafts, upstream and downstream of the coupling device (2). The coupling device is adjustable according to torque transmission;

   b) this difference in r.p.m. is transformed on the basis of noted characteristics of torque transmission of the coupling device (2), into a regulation or drive signal the coupling device in relation to the transmitted torque.

   c) the transformation of the difference in r.p.m. is made in such a way that the regulation or driving of the coupling device (2) determines a minimization or a reduction to almost zero of the difference in r.p.m. between the electric motor (M1, M2) and the driving wheel (1).

   d) the measurement of the difference in r.p.m., its transformation and the regulation of the coupling device (2) is carried out continuously and in real time.

2. Method in accordance with claim 1, characterized by the fact that:

   a) the driving wheel (1) is activated by two different motors (M1, M2), one of which, the so-called starter motor, delivers the maximum torque at a low r.p.m., while the other, the so-called cruising motor, develops the maximum torque at a high r.p.m..

   b) the actual running conditions of the vehicle, for example, speed and delivered torque of the motors M1 and M2 and the torque desired by the driver, for example the acceleration, are monitored.

   c) the starter motor (M2) and the cruising motor (M1) are activated alternately or contemporaneously according to observed running conditions of the vehicle, in particular, the starter motor (M2) is activated for acceleration or starting up from a stationary position and the cruising motor (M1) is activated in cruising conditions.

3. Method according to claims 1 or 2, for transmission control in electric vehicles with two or more driving wheels (1), characterized by the fact that:

   a) each driving wheel (1) is activated by an independent electric propulsion unit with one or two electric motors M1, M2;

   b) r.p.m. of each driving wheel is monitored (1);

   c) the adjustment of the operating conditions of each electric propulsion system (M1, M2) for each driving wheel is carried out according to differences in r.p.m. of the driving wheels and steering wheel angle;

   d) when travelling in a straight line the motors (M1, M2) are regulated to make the difference in driving wheel speed (1) equal to zero, implementing the flexible coupling and braking regulation functions;

   e) when turning, the propulsion system (M1, M2) of each driving wheel, is regulated to obtain different speeds on driving wheels (1), as calculated for the given steering angle, and implement selflocking and flexible coupling functions.

4. Device for the actuation of the method according to claim 1, characterized by:

   a coupling device (2) inserted between the driving wheel shaft (1) and the shaft of the connected propulsion system (M1, M2). This device is electrically adjustable. The following are also foreseen:

   two electronic sensors (19a, 19b) to monitor r.p.m. are positioned, respectively, on the shaft of electric propulsion system (M1, M2), upstream and downstream of the coupling device (2), and on the shaft of the driving wheel (1), downstream of the coupling device;

a control computer (15) with in-puts for r.p.m. sensor data (19a, 19b), at least one control out-put to which the adjustable coupling device (2) is connected, and a memory which contains the transmission characteristics of said coupling device (2) according to the regulation range used.

5. Device according to claim 4, characterized by: a coupling device (2) which may be mechanical, with an electric regulating actuator or an electromagnetic or electroliquid clutch provided with a speed reducer belt, preferably with a linear relationship between driving or regulation voltage and delivered torque.

6. Device according to one or more of the preceding claims, characterized by the fact that the electrical motor of each driving wheel is made up of at least two electric motors (M1, M2) which can be connected separately and/or contemporaneously to the motor shaft of the driving wheel(s), for example, by a selective coupling device, and being activated separately and/or together, one of which motors, the so-called "starter motor" (M2), can develop the maximum torque at low r.p.m. while the other, the so-called "cruising motor" (M1) develops the maximum torque at high r.p.m., being forwarded of switching systems (5, 15, 17, 18a, 18b) that activate one of the two motors (M1, M2) or both motors together (M1, M2) according to the vehicle running conditions appropriate to one or the other motor (M1, M2).

7. Device according to claim 6, characterized by the fact that switching systems consisting of an energy control unit (5) positioned between the electric motors (M1, M2) of each propulsion system and the electrical energy accumulator (3, 4) and which is activated by computer (15) according to the activation of one or the other of the motors (M1, M2) or both motors (M1, M2) according to vehicle running conditions, being forwarded of monitoring sensors of vehicle running conditions that consist of a monitoring sensor (18a, 18b) recording the difference in the delivered torque of the motors (M1, M2) and being that sensor (18a, 18b) connected to computer in-put as is the actuator device of the desired torque (accelerator pedal 17).

8. Device according to claims 6 and 7, characterized by the fact that the motors (M1, M2) of each propulsion system are mounted on a common motor shaft which is divided into two sections linked respectively to a motor (M1 and M2) and linked together by a selective coupling device, (for example a flexible coupling (22) or a one-way bearing or similar) while the starter motor (M2) is placed between the cruising motor (M1) and the coupling device (2) and relating to each motor shaft section a sensor (18a, 18b) is forwarded, in particular a r.p.m. sensor which sensors (18a, 18b) constitue a common motor shaft torsion sensor.

9. Device according to one or more of the preceding claims, characterized by the fact that the starter (M2) and cruising (M1) motors may consist of permanent magnet automation motors, preferably developing a maximum torque at a speed of respectively 1000 r.p.m. and 3000 r.p.m., and a linear response in respect to the supply voltage.

10. Device according to one or more of the preceding claims, characterized by the fact that steering angle sensors (2**) are provided connected, for example, to the steering wheels or the steering device and which are connected to the computer (15) in-put.

11. Device according to one or more of the preceding claims, characterized by the fact that the computer (15) operates in real time on a number of parameters at once.

12. Device according to one or more or the preceding claims, characterized by the fact that when the vehicle is stationary the coupling device (2) is deactivated, freeing the respective driving wheel (1) from the propulsion system while the computer (15) is programmed to wait for a given period of time before during which the propulsion system (M1, M2) are kept activated in order to become deactivated at the end of such waiting period.

13. Device according to one or more of the preceding claims, characterized by the fact that the sensors which monitor the r.p.m. of the driving wheels (19a) are used at the same time to send the driving or regulation signal of the coupling device (2) and to measure the difference in r.p.m. between the driving wheels (1).

14. Method and control device for electrical feed vehicles transmission wholly or partly as described and illustrated for the purposes herein described.

Fig.1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 177 770  (SIEMENS AG)<br>* The whole document *<br>--- | 1-14 | B 60 L  11/18 |
| A | DE-A-2 509 862  (REGIE NATIONAL DES USINES RENAULT)<br>* The whole document *<br>--- | 1-14 | |
| A | EP-A-0 197 209  (D.E. WALKER)<br>* Abstract; figure 1 *<br>--- | 1,2 | |
| A | DE-A-3 804 634  (ROBERT BOSCH GmbH)<br>* The whole document *<br>--- | 1,2,4 | |
| A | US-A-4 471 273  (G.C. MELOCIK et al.)<br>* Abstract; figure 2A *<br>--- | 1,4 | |
| A | DE-A-3 043 004  (LICENTIA PATENT-VERWALTUNGS-GmbH)<br>* The whole document *<br>----- | 1,3,4 | |

TECHNICAL FIELDS SEARCHED (Int. Cl.5)

B 60 L
H 02 P

The present search report has been drawn up for all claims

| Place of search | Date of completion of the search | Examiner |
|---|---|---|
| THE HAGUE | 03-02-1992 | BEYER F. |

EPO FORM 1503 03.82 (P0401)